# EUROPÄISCHE PATENTSCHRIFT

(11) **EP 1 656 058 B1**
(45) Veröffentlichungstag und Bekanntmachung des Hinweises auf die Patenterteilung: **08.04.2009**
(21) Anmeldenummer: 04763968.7
(22) Anmeldetag: 10.08.2004
(51) Int. Cl.: A47J 19/02

(54) **SAFTPRESSE MIT INNEREN PASSIERELEMENTEN**
JUICE PRESS WITH INTERNAL STRAINING ELEMENTS
PRESSE-AGRUMES A ELEMENTS DE FILTRAGE INTERNES

(30) Priorität: 11.08.2003 DE 10336824
(43) Veröffentlichungstag der Anmeldung: 17.05.2006
(73) Patentinhaber: BSH Bosch und Siemens Hausgeräte GmbH, 81739 München (DE)
(72) Erfinder: ZIBRET, Igor, 3327 Smartno ob Paki (SI); PAVLOVIC, Henrik, 3333 Ljubno ob Savin (SI); BREZOVNIK, Peter, 3330 Mozirje (SI)
(86) Internationale Anmeldenummer: PCT/EP2004/008955
(87) Internationale Veröffentlichungsnummer: WO 2005/016090

(56) Entgegenhaltungen:
- DE-C- 3 931 016
- GB-A- 2 374 522

## Beschreibung

Die Erfindung betrifft eine Saftpresse gemäß dem Oberbegriff des Anspruchs 1.

Aus DE 39 23 865 C2 ist eine elektrisch betriebene Saftpresse mit einem Presskegel bekannt, der Tresterfinger aufweist, die dem Presskegel zugeordnet sind und die beim Gebrauch der Saftpresse oberhalb eines Siebes umlaufen. Die Tresterfinger wirken dabei mit dem ausgepressten Fruchtfleisch zusammen und drücken dieses durch die Schlitze des Siebes hindurch in einen darunter befindlichen Auffangbehälter. Die Siebfläche erstreckt sich bis unter die Kontur des Presskegels, wobei jedoch die Tresterfinger sich von der Kontur des Presskegels ausschließlich nach außen erstrecken. So wird der unter dem Presskegel liegende Teil der Siebfläche nicht von den Tresterfingern überstrichen.

Aus der britischen Offenlegungsschrift 2 374 522 A ist ein Entsafter mit einem Presskegel bekannt, auf dessen Innenseite zwei schaufelartige Elemente angeordnet sind, die beim Entsaften die Schlitze des Siebs abwischen sollen, um sie von Rückständen freizuhalten. Auf diese Weise kann ein Verstopfen der Schlitze vermieden und so der Betrieb und die Reinigung des Entsafters erleichtert werden.

Die deutsche Patentschrift DE 39 31 016 C1 offenbart eine elektrisch angetriebene Zitruspresse, bei der der Presskegel ringförmig von dem Sieb umgeben ist, wobei sich zwischen Presskegel und Sieb ein Ringspalt befindet. Mittels einer Höhenverstelleinrichtung kann die Breite des Ringspalts verändert werden, um zu bestimmen, ein wie großer Anteil des Tresters durch den Ringspalt in den Saft gelangt. Der dem Ringspalt zugewandte Rand des Siebes weist Durchlässe für den Saft auf, die zur einfachen Reinigung des Siebs zum Ringspalt hin offen sind. Außerdem ist am Presskegel ein radial hervorspringender Abstreifer angeformt, der die Durchlässe frei von groben Tresterrückständen halten soll.

Aufgabe der Erfindung ist es, eine Saftpresse zu schaffen, bei der die Saftausbeute beim Pressen verbessert ist.

Diese Aufgabe wird erfindungsgemäß dadurch gelöst, dass das mindestens eine Passierelement eine dem verdeckten saftdurchlässigen Bereich der Siebfläche zugewandte scharfkantige stirnkante aufweist, damit die unter dem Presskegel befindlichen Tresteranteile messerartig geschnitten und zerrieben werden, wodurch evtl. noch nicht aufgeschlossene Tresteranteile ihre Saftinhalte freigeben. Das Passierelement zum Überstreichen des verdeckten saftdurchlässigen Bereiches ist drehfest mit dem Presskegel verbunden. Die erfindungsgemäßen Passierelemente sind nicht außerhalb der Mantelfläche des Presskegels angeordnet, sondern innerhalb der Mantelfläche des Presskegels.

Die Passierelemente können entweder alleine oder in Ergänzung zu radial nach außen weisenden Tresterfingern vorgesehen sein. Vorzugsweise ist der Presskegel axial um eine Höhe verschieblich gelagert, derart, dass durch Hinunterdrücken des Presskegels ein elektrischer Schalter betätigt wird, der den Motor der Saftpresse anlaufen lässt. Wird der Presskegel losgelassen, so kehrt der Presskegel in eine obere Höhenposition zurück in der sich der Presskegel in einer Ruhelage befindet. In der Ruhelage des Presskegels ist ein deutlicher Spalt zwischen Presskegel und Siebfläche vorhanden, so dass Tresteranteile unter den Presskegel gelangen können. Durch Drücken des Presskegels wird die Saftpresse gestartet und die Passierelemente drücken auf die Tresteranteile, die unter den Presskegel gelangt sind. Aufgrund der Passierelemente wird auch der unter den Presskegel gelangte Tresteranteil gedrückt und gequetscht, so dass zusätzlich Saft aus diesen Tresteranteilen ausgepresst wird.

Vorzugsweise ist das mindestens eine Passierelement am Presskegel angeformt. Durch das direkte einstöckige Anförmen eines oder mehrerer Passlerelemente an den Presskegel wird die Teilevletfalt reduziert und ein gesonderter Montageschritt zur Befestigung der Passierelemente am Presskegel kann entfallen. Die Saftpress ist somit kostengünstige herstelbar. Dabei kann das mindestens eine Passierelement insbesondere an einer Innenseite der Kegelwand angeformt sein.

In einer vorteilhaften Ausgestaltung sind zwei gegenüberliegend am Presskegel angeordnete Passierelemente vorgesehen. Es hat sich gezeigt, dass zwei diametral gegenüberliegende Passierelement eine besonders gute Passierwirkung zeigen, jedoch noch genug Hohlraum vorhanden ist, um Tresteranteile aufzunehmen. Der Presskegel muß jedoch nicht zwangsweise hohl ausgebildet sein. Der Presskegel könnte sogar aus Vollmaterial hergestellt und die Passierelement im Vollmaterial Integriert sein. Alternativ könnte der Presskegel als geschlossener Hohlkörper blasgeformt sein, wobei der Presskegel eine dem Sieb zugewandte Seitenwand aufweist, die die Passierelemente aufweist.

Vorzugsweise sind eine Vielzahl gleichmäßig über den Umfang verteilter Passierelemente am Presskegel vorgesehen. So wird eine gleichmäßige Wirkung für das Zerquetschen und Pressen erzielt, wobei ein Verkanten oder unerwünschte Biegekräfte am Presskegel ausgeschlossen werden, die sonst bei einer ungleichmäßigen Verteilung der Passierelemente am Presskegel zu erwarten wären.

Vorzugsweise ist die Kante des Passierelements radial erstreckend angeordnet So bewegt sich die scharfe Kante jeden Passierelements in kratzender Art und Weise uber die Siebfläche, wodurch die zerkleinerten Tresteranteile einer Kraft ausgesetzt sind, die die feinen Tresteranteile durch das Sieb hindurchdrücken, wodurch diese somit in den ausgepressten Saft gelangen können.

Die Kante kann in einem von der Kegelwand umgebenen Hohlraum des Presskegels angeordnet sein. Vorzugsweise ist dabei die Kante an einem in den Hohlraum des Presskegels hineinragenden Stegabschnitt des Presskegels ausgebildet ist. Der Stegabschnitt stützt dabei die radial verlaufende Kante des Passierelements, derart dass ein Ausweichen der Kante entgegen der Druckwirkung auf die Tresteranteil verhindert ist. Der Stegabschnitt kann über nahezu die gesamte Höhe des Presskegels an der Innenseite der Mantelwand angeformt sein.

In vorteilhafter Weise ist der Stegabschnitt senkrecht zu dem vom Presskegel verdeckten saftdurchlässigen Bereich der Siebfläche ausgerichtet. Die senkrechte Ausrichtung des Stegabschnitts ermöglicht insbesondere die Herstellung des Presskegels in einem einstückigen Verbund mit den Stegabschnitten in einem einfachen zweiteiligen Spritzgußwerkzeug. Die Herstellkosten sind dadurch für den Presskegel verringert.

Eine bevorzugte Ausgestaltung der Erfindung ist im folgenden anhand der Figuren 1 bis 11 näher erläutert.

### Es zeigen:

- Figur 1: einen Querschnitt durch eine erfindungsgemäße Saftpresse;
- Figur 2: eine Schnittdarstellung durch ein oberes Sieb mit einem aufgesetzten Presskegel in Seitenansicht;
- Figur 3: eine perspektivische Ansicht des oberen Siebes gemäß Figur 2 mit dem aufgesetzten Presskegel im Teilschnitt;
- Figur 4: eine Schnittdarstellung durch das obere Sieb und den Presskegel gemäß Figur 2;
- Figur 5: eine perspektivische Ansicht des Presskegels gemäß Figur 2 von unten;
- Figur 6: eine perspektivische Ansicht des oberen Siebes gemäß Figur 2 mit einem angesetzten unteren Sieb;
- Figur 7: eine perspektivische Ansicht des oberen Siebes gemäß Figur 2 von unten;
- Figur 8: eine perspektivische Ansicht des unteren Siebes gemäß Figur 6 von oben;
- Figur 9: eine perspektivische Ansicht der Saftpresse gemäß Figur 1;
- Figur 10: eine perspektivische Teilansicht eines Griffes an der Saftpresse gemäß Figur 9;
- Figur 11: eine perspektivische Teilansicht einer Ringnut mit Rastnase an der Saftpresse gemäß Figur 9;

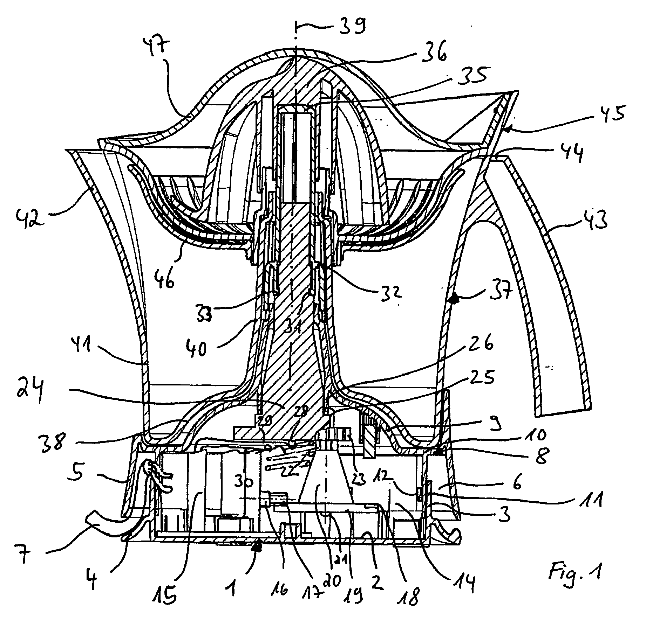

Die in Figur 1 im Schnitt dargestellte Saftpresse weist einen becherförmigen Gehäuseboden 1 mit einer kreisscheibenförmigen Bodenfläche 2 und einer um den Rand der Bodenfläche 2 umlaufenden zylindrischen Seitenwand 3 auf. An der Seitenwand 3 ist ein rinnenförmiger, um den Gehäuseboden 1 umlaufender, radial von der Seitenwand nach außen gerichteter, im Querschnitt bogenförmiger Tragrand 4 angeformt. Der Tragrand 4 begrenzt zusammen mit einer Schürze 5 eine Ringnut 6 zur Aufnahme eines elektrischen Anschlusskabels 7. Die Schürze 5 wird durch einen an einer domförmigen Abdeckung 8 angeformten Wandabschnitt gebildet. Die Abdeckung 8 weist eine kuppelartige Dachfläche 9 auf, an deren horizontal verlaufenden Randabschnitt 10 sich der die Schürze 5 bildende Wandabschnitt anschließt. Dieser Wandabschnitt ist im wesentlichen vertikal verlaufend angeordnet und weist eine leicht kegelig ausgebildete Mantelfläche auf. Unterhalb des kreisringförmigen Randabschnitts 10 erstreckt sich senkrecht nach unten eine zur umlaufenden zylindrischen Seitenwand 3 korrespondierende umlaufende zylindrische Seitenwand 11. Die Seitenwände 3 und 11 sind koaxial zueinander ausgerichtet und überlappen in ihren Randbereichen. An der Seitenwand 11 sind eine Vielzahl von über den Umfang gleichmäßig verteilter Aussparungen 12 vorgesehen, in die zugeordnete, radial nach innen gerichtete Rastzapfen 13 an der Seitenwand 3 des Gehäusebodens 1 eingreifen. Aufgrund der Ausparungen 12 und den eingreifenden Rastzapfen 13 können Gehäuseboden 1 und Abdeckung 8 ohne Verwendung zusätzlicher gesonderter Verbindungsmittel verbunden werden. Gehäuseboden 1 und Abdeckung 8 begrenzen einen Hohlraum 14 zur Aufnahme eines Antriebs.

Der Antrieb umfasst einen an das Anschlußkabel 7 elektrisch kontaktierten Motor 15, der eine Motorwelle 16 aufweist, an der ein Abtriebsritzel 17 sitzt. Das Motorwellenritzel 17 kämmt mit einem axialen Antriebszahnprofil 18, welches auf einem Tellerrad 19 sitzt. Das Tellerrad 19 ist einstückig mit einer kegelstumpfförmigen Getriebewelle 20 ausgebildet. Die Getriebewelle 20 sitzt mit seinem einen axialen Ende auf einem an der Bodenfläche 2 des Gehäusebodens 1 angeformten Nadelsitz 21 drehbar auf. An dem axial gegenüberliegenden anderen Ende der Getriebewelle 20 ist ein Abtriebsritzel 22 angeformt. Das Abtriebsritzel 22 kämmt stirnseitig mit einer Stirnverzahnung 23, die an einem unteren Ende einer Werkzeugwelle 24 vorgesehen ist.

Die Werkzeugwelle 24 weist einen radialen Absatz 25 auf, der in axialer Richtung an einen an der Abdeckung 8 angeformten Ringbund 26 mittels einer Federwendel 27 axial vorgespannt axial verschieblich gelagert ist. Die Federwendel 27 stütz sich einerseits an der Bodenfläche 2 des Gehäusebodens 1 und andererseits an der unteren Stirnseite der Werkzeugwelle 24 ab. Mittels der Federwendel 27 ist die Werkzeugwelle 24 in axialer Richtung nach oben vorgespannt. Wird die Werkzeugwelle 24 in axialer Richtung nach unten gedrückt, so drückt eine an der unteren Stirnseite der Werkzeugwelle 24 angeformte Schaltnase 28 auf eine obere Schaltzunge 29. Wenn die obere Schaltzunge 29 elektrisch mit einer unteren Schaltzunge 30 kontaktiert, wird die Stromzufuhr vom Anschlußkabel 7 zum Motor 15 geschlossen. Wird der axial nach unten gerichtete Druck von der Werkzeugwelle 24 wieder weggenommen, so kehrt die Werkzeugwelle aufgrund der gespannten Federwendel 27 wieder in ihre Ausgangslage, in welcher der Absatz 25 an dem Ringbund 26 ansteht zurück, so federt die obere Schaltzunge 29 wieder in ihre Ursprungslage zurück und die Verbindung zu der unteren Schaltzunge 30 ist aufgehoben und die Stromzufuhr von dem Anschlußkabel 7 zu dem Motor 15 unterbrochen. In einer mittleren Höhe weist die Werkzeugwelle 24 eine Radialnut 31 auf, an der ein Kupplungszapfen 32 aufschnappbar ist. Der Kupplungszapfen weist dazu mehrere über den Umfang gleichmäßig verteilter, radial nach innen gerichtete Schnappnasen 33 auf, die in die Radialnut 31 eingreifen. Zur Abdichtung eines Spaltes zwischen Werkzeugwelle 24 und Kupplungszapfen 32 ist eine mantelartig um den Spalt verlaufende Spritzschutzwand 34 am Kupplungszapfen 32 angeformt. An einem oberen freien Ende weist der Kupplungszapfen 32 ein Sechskantprofil 35 auf, auf den ein Presskegel 36 drehfest aber axial abziehbar aufgesteckt ist.

Um die Werkzeugwelle 24 herum ist ein topfförmiger Auffangbehälter 37 angeordnet. Der Auffangbehälter 37 weist einen der Dachfläche 9 der Abdeckung 8 angepassten Behälterboden 38 auf. Zentral aus dem Behälterboden 38 erstreckt sich koaxial zu einer Achse 39 der Werkzeugwelle 24 eine rohrförmige Behälterhülse 40, die in einer eingesetzten Position des Auffangbehälters 37 von der Werkzeugwelle 24 bzw. von dem Kupplungszapfen 32 durchdrungen wird. An einem äußeren Randabschnitt des Behälterbodens 38 schließt sich eine über den Umfang verlaufende, sich nach oben erstreckende Behälterwand 41 an. An der Behälterwand 41 ist eine Ausgießschnaupe 42 für ausgepressten Saft angeformt. An einer der Ausgießschnaupe 42 gegenüberliegenden Seite der Behälterwand 41 ist ein hohler, nach unten hin offen ausgebildeter Griff 43 angeformt. Der Griff 43 erstreckt sich von einem oberen Rand 44 des Auffangbehälters 37 bogenförmig nach unten bis kurz vor das untere Ende des Auffangbehälters 37.

Auf den oberen Rand 44 ist ein oberer Siebkörper 45 auf den Auffangbehälter 37 aufgesetzt. Unterhalb des Siebkörpers 45 ist ein unterer Siebkörper 46 gelagert. Oberhalb der Siebkörper 45 und 46 ist der Presskegel 36 drehfest auf das Sechskantprofil 35 des Kupplungszapfens 32 aufgesetzt. Den oberen Abschluß der Saftpresse bildet ein Deckel 47, der auf dem oberen Siebköper 45 aufliegt und den Presskegel 36 vollständig verdeckt. Der Deckel 47 ist zur Anpassung an die Kontur des Presskegels 36 leicht nach außen gewölbt geformt. Der Presskegel 36, der oberer Siebkörper 45, sowie der untere Siebkörper 46 sind in den folgenden Figuren näher erläutert.

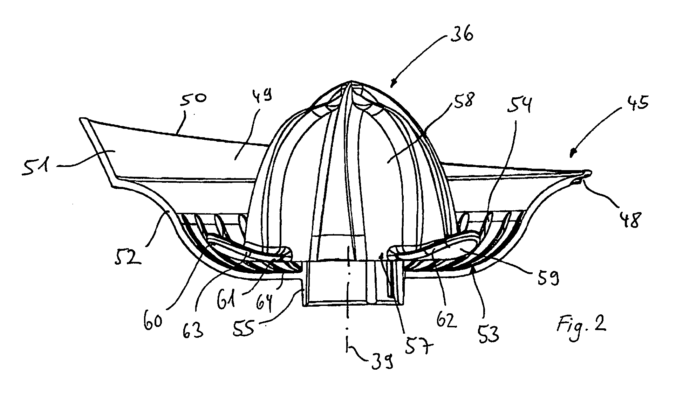

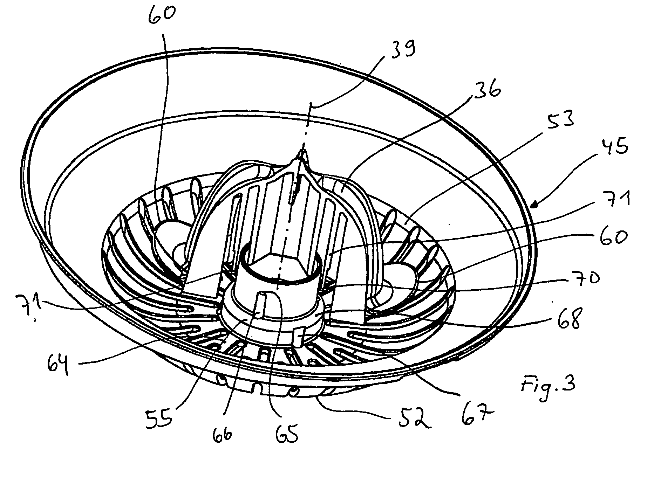

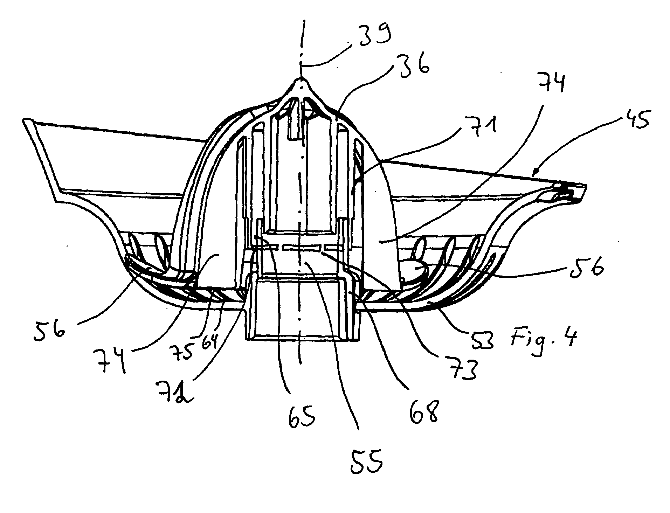

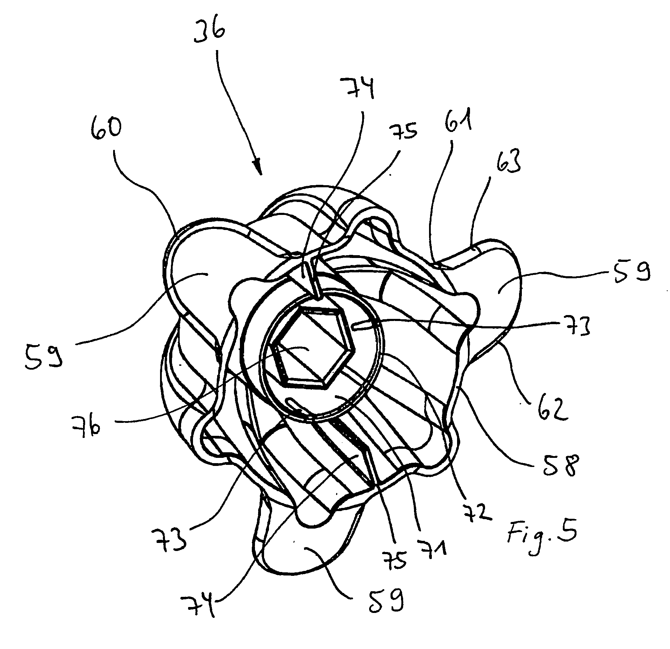

In Figur 2 ist der obere Siebkörper 45 geschnitten dargestellt und der Presskegel 36 in Seitenansicht gezeigt. Der Siebkörper 45 weist eine schüsselartige Form auf. Oberhalb eines kreisringförmigen Schüsselrandes 48 ist eine kegelförmig sich nach oben öffnende Mantelwand 49 angeformt. Ein oberer Rand 50 der Mantelwand 49 ist gegenüber der horizontalen schräg gekippt verlaufend ausgebildet, so dass die Mantelwand 49 in Figur 2 rechts dargestellt ihre geringste Höhe und in Figur 2 links dargestellt ihre größte Höhe aufweist. Der Bereich der Mantelwand 49 mit der größten Höhe bildet dabei einen Griffbereich 51, mit dem der obere Siebkörper 45 gegriffen werden kann. Eine Siebbodenfläche 52 schließt sich unterhalb des Schüsselrandes 48 an. Die Siebbodenfläche 52 ist schalenartig nach unten gewölbt. In der Siebbodenfläche 52 ist eine Siebfläche 53 ausgebildet. Die Siebfläche 53 wird durch eine Vielzahl von radial verlaufenden Schlitzen 54 gebildet. Die Schlitze 54 erstrecken sich radial von einer innerhalb des von der Grundrissfläche des Presskegels 36 überdeckten Siebfläche 53 ausgehend, nach außen hin entlang eines um einen Radius gekrümmten Flächenbereichs der Siebbodenfläche 52 bis zu einem oberen Ende hin. Unterhalb des Presskegels 36 ist in der Mittel der Siebbodenfläche 52 ein sich nach oben und unten aus der Ebene der Siebbodenfläche 52 herausragender, koaxial zur Achse 39 verlaufender Rohrabschnitt 55 an die Siebbodenfläche 52 angeformt. Der Rohrabschnitt 55 ist in den folgenden Figuren 3 und 4 näher erläutert. Der Presskegel 36 weist drei gleichmäßig über den Umfang verteilte Tresterfinger 56 auf. Jeder Tresterfinger 56 ist im Bereich des unteren Endabschnitts 57 einer Kegelwand 58 des Presskegels 36 angeformt und ragt in radialer Richtung nach außen von der Kegelwand 58 weg. Der gesamte nach außen ragende Tresterfinger 56 ist schnabel- bzw. löffelartig nach oben gebogen geformt. Eine der Siebfläche 53 zugewandte Seitenfläche 59 des Tresterfingers 56 ist gegenüber der Siebfläche 53 in einem Winkel angestellt. Aufgrund der schnabel- bzw. löffelartigen Form verläuft die Seitenfläche 59 derart, dass im Bereich des radial freien Endabschnitts 60 des Tresterfingers 56 die Seitenfläche 59 einen größeren Abstand zur Siebfläche 53 aufweist, als in einem Bereich des Tresterfingers 56, der in der Nähe eines Wurzelbereiches 61 des Tresterfingers 56 liegt, wo er an die Kegelwand 58 des Presskegels 36 angeformt ist. Im Ausführungsbeispiel ist die Saftpresse für Links- und Rechtslauf ausgebildet, so dass der Tresterfinger 56 an seinen in Umfangsrichtung in Drehrichtung und entgegen der Drehrichtung des Presskegels 36 weisenden Rändern 62 und 63 schnabel- oder löffelartig nach oben gebogen verlaufend ausgebildet ist. Die Ausbildung der Tresterfinger 56 ist auch in Figur 5 deutlich gezeigt.

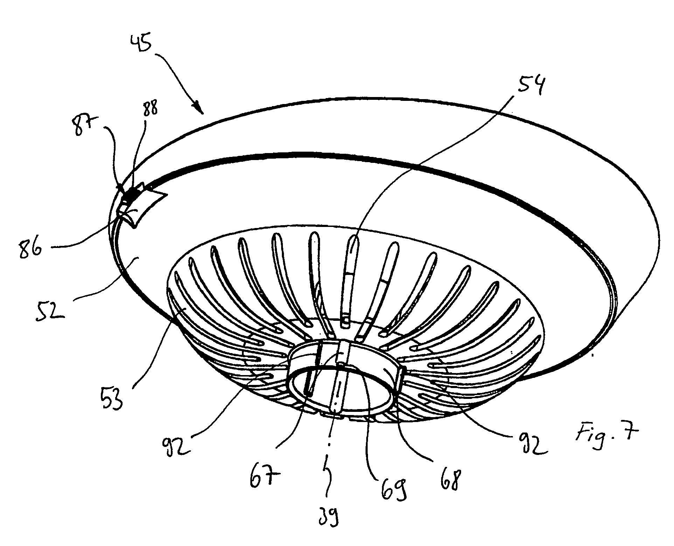

In Figur 3 ist der Presskegel 36 im Schnitt dargestellt und der obere Siebkörper 45 in perspektivischer Ansicht gezeigt. Der obere Siebkörper 45 weist einen saftdurchlässigen Bereich 64 auf, der in einem inneren Bereich der schalenartig gewölbten Siebbodenfläche 52 beginnend sich bis über die radial freien Endabschnitte 60 nach außen hin in der Siebbodenfläche 52 erstrecken. Der saftdurchlässige Bereich 64 der Siebfläche 53 erstreckt sich dadurch über die gesamte der von den Tresterfingern 36 überstrichenen Fläche. Der saftdurchlässige Bereich 64 wird von einer Vielzahl der sich radial in der Siebfläche 53 erstreckenden Schlitzen 54 gebildet. Jeweils jeder zweite Schlitz 54 endet im radialen Zentrum der Siebbodenfläche 52 unterhalb des Presskegels 36 kurz vor Erreichen des Rohrabschnitts 55. Die weiteren Schlitze 54 sind kürzer ausgebildet und enden bereits deutlich vor Erreichen des Rohrabschnitts 55. Sämtliche Schlitze 54 weisen die gleiche Schlitzbreite auf. Der Rohrabschnitt 55 ist koaxial zur Kegelachse 39 angeordnet und erstreckt sich etwa um die halbe Höhe des Presskegels 36 nach oben. Am Rohrabschnitt 55 ist im Vordergrund der Figur 3 ein Gegenrastelement 65 gezeigt. Der Rohrabschnitt 55 trägt insgesamt drei gleichmäßig über den Umfang verteilte Gegenrastelemente 65, die vom Rohrabschnitt 65 ausgehend radial nach außen vorspringen und knopfartig angeformt sind. Unterhalb jedem knopfartigen Gegenrastelement 65 ist eine obere Entformausnehmung 66 am Rohrabschnitt 55 ausgebildet, damit der Siebkörper in einem zweiteiligen Werkzeug im Kunststoffspritzgussverfahren hergestellt werden kann. Die oberen Entformausnehmungen 66 sind nötig, um die Gegenrastelemente 65 entformen zu können, die in einer außerhalb der Trennebene des Spritzgusswerkzeugs liegenden Ebene am Rohrabschnitt 55 angeordnet sind. Der Rohrabschnitt 55 weist am Übergangsbereich zur oberen Siebfläche 53 einen im Durchmesser vergrößerten Abschnitt 68 auf an dem eine zur oberen Entformausnehmung 66 analoge untere Entformausnehmung 67 angeformt ist. Die untere Entformausnehmung 67 ist zur Herstellung von in Figur 7 gezeigten unteren Gegenrastelementen 69 zur Halterung des unteren Siebkörpers 46 vorgesehen. Die oberen Gegenrastelemente 65 halten den Presskegel 36 mittel mindesten eines Rastelements 70, das an einem am Presskegel 36 angeformten Rohrstück 71 ihrerseits radial nach innen ragend angeformt sind. Das mindestens eine Rastelement 70 erstreckt sich in Form eines Ringwulstes 72, wie in Figur 4 gezeigt.

Figur 4 zeigt wie die oberen Gegenrastelemente 65 radial nach außen abstehend an den Rohrabschnitt 55 angeformt sind. In der in Figur 4 gezeigten Position befindet sich der Presskegel 36 in einer am oberen Siebkörper 45 verrasteten Position. In der verrasteten Position kann der Presskegel zwar um seine Kegelachse 39 am oberen Siebkörper 45 sich drehen, er kann jedoch nur mit deutlichem Kraftaufwand in axialer Richtung nach oben von dem oberen Siebkörper 45 abgezogen werden. Dazu befindet sich in der gezeigte, verrasteten Position des Presskegels 36 die Ringwulst 72 axial unterhalb der Gegenrastelemente 65. Die Ringwulst 72 ist am unteren Ende des Rohrstücks 71 radial nach innen ausbauchend angeformt. Die Ringwulst 72 weist eine Vielzahl von Einkerbungen 73 auf, die eine gewisse Elastizität erzeugen, damit der Presskegel mit definiertem Kraftaufwand in axialer Richtung von dem oberen Siebkörper 45 abgezogen werden kann, wenn dies gewünscht ist. In der in Figur 4 gezeigten Schnittansicht des Presskegels 36 sind zwei diametral gegenüberliegende Passierelemente 74 im inneren Hohlraum des Presskegels angeformt. Die Passierelemente 74 erstrecken sich in vertikaler Richtung über die gesamte Höhe des Presskegels 36 und ragen in radialer Richtung zur Kegelachse 39 hin nach innen vor. Eine kurze Stirnkante 75 des Passierelements 74 ist dem saftdurchlässigen Bereich der Siebfläche 53 zugewandt, die sich unter der Grundrissfläche des Presskegels 36 befindet. Die Passierelemente 74 sind insbesondere in Figur 5 deutlicher gezeigt.

In Figur 5 ist die Kegelwand 58 des Presskegels 36 von innen gezeigt. An der Innenseite der Kegelwand 58 sind zwei diametral gegenüberliegende Passierelemente 74 radial nach innen abstehend angeformt. Die Passierelemente erstrecken sich bis zum unteren Ende der Kegelwand 58 und weisen dort die Stirnkanten 75 auf. Die Stirnkanten 75 sind scharfkantig ausgebildet und erstrecken sich radial nach innen bis nahe an den Durchmesser des Rohrstücks 71 heran. Am unteren Ende des Rohrstücks 71 ist die Ringwulst 72 nach innen ragend angeformt. Das Rohrstück 71 weist die mehreren über den Umfang gleichmäßig verteilten Einkerbungen 73 auf, die dazu dienen, die Ringwulst 72 an mehreren Stellen zu unterbrechen, um eine gewisse Elastizität in die Ringwulst zu bringen. Koaxial zum Rohrstück 71 ist innerhalb des Rohrstücks 71 ein Innensechskant 76 am Presskegel 36 angeformt, in den das Sechskantprofil 35 der Werkzeugwelle 24 zur Übertragung eines vom Motor 15 erzeugten Drehmoments auf den Presskegel 36 einsetzbar ist (Figur1).

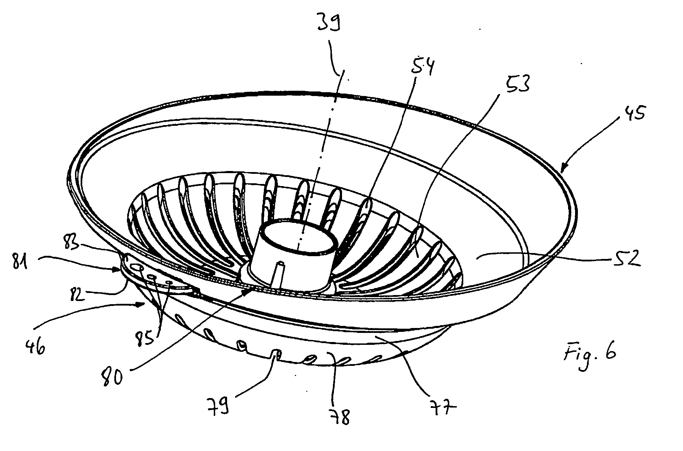

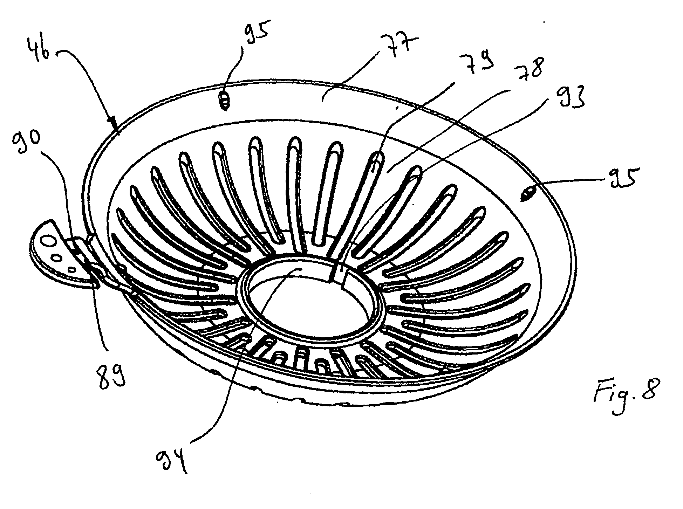

In Figur 6 ist der obere Siebkörper 45 und der untere Siebkörper 46 in zusammengebautem Zustand gezeigt. Analog zum oberen Siebkörper 45 weist auch der untere Siebköper 46 eine Siebbodenfläche 77, eine Siebfläche 78 und darin in radialer Richtung verlaufende Schlitze 79 auf. Die Schlitze 79 sind im unteren Siebkörper 46 derart verlaufend angebracht, dass sie bei deckungsgleicher Lage von unterem Siebkörper 46 und oberem Siebkörper 45 mit den Schlitzen 54 in dem oberen Siebkörper 45 fluchten. Der untere Siebkörper 46 ist mittels eines Drehlagers 80 um die Kegelachse 39 drehbar am oberen Siebkörper 45 gehalten. Die Ausbildung des Drehlagers 80 ist in den Figuren 7 und 8 im Detail dargestellt. Am unteren Siebkörper 46 ist des weiteren ein Griffabschnitt 81 vorgesehen. Der Griffabschnitt 81 ist am äußeren Umfang des unteren Siebkörpers 46 radial nach außen abstehend angeformt. Der Griffabschnitt 81 ist halbkreisförmig ausgebildet und weist eine untere Seitenwand 82 auf, die sich auf dem oberen Rand 44 des Auffangbehälters 37 (Figur 1) abzustützen vermag. Der Griffabschnitt 81 weist des weiteren eine obere Seitenwand 83 auf, die eine Betätigungsfläche 84 bildet. Auf der Betätigungsfläche 84 ist eine Oberflächenstruktur in Form dreier vorspringender linsenartiger Erhebungen 85 aufgebracht. Die drei linsenartigen Erhebungen 84 bilden sowohl eine optische als auch eine haptische Markierung für die Drehrichtung des unteren Siebkörpers 46 bezogen auf den oberen Siebkörper 45. Zur Wirkung als Drehrichtungsmarkierung ist die in Figur 6 links angeordnete Erhebung 84 im Durchmesser und in Höhe am größten ausgebildet, wo hingegen die in Figur 6 rechts dargestellte Erhebung 84 den kleinsten Durchmesser und die kleinste Höhe aufweist. Dazwischen liegend ist eine Erhebung 85 angeordnet, die einen mittleren Durchmesser und eine mittlere Höhe aufweist. Wird das untere Sieb 46 in Richtung der größten Erhebung 85, gemäß Figur 6 also im Uhrzeigersinn bewegt, so fluchten die Schlitze 79 des unteren Siebkörpers 46 mit den Schlitzen 54 im oberen Siebkörper 45, so dass ein größter Öffnungsquerschnitt für durchtretenden Saft geschaffen ist. Wird das untere Sieb in Richtung der kleinsten Erhebung 85, gemäß Figur 6 also entgegen dem Uhrzeigersinn bewegt, so liegen die Schlitze 79 des unteren Siebkörpers 46 weitgehend verschoben zu den Schlitzen 54 im oberen Siebkörper 45, so dass der kleinste Öffnungsquerschnitt für durchtretenden Saft geschaffen ist.

Wie in Figur 7 gezeigt trägt der obere Siebkörper 45 im Bereich des Umfangsrandes der Siebbodenfläche 52 eine Aussparung 86, die ein dem unteren Siebkörper 46 zugewandtes Gegenrastmittel 87 in Form von einer Anzahl von keilförmigen Zähnen ein Zahnprofil 88 bildet. Ein am unteren Siebkörper 46 vorgesehenes zum Gegenrastmittel 87 korrespondierendes, in Figur 8 dargestelltes Rastmittel 89 weist einen Rastzahn 90 auf, der in das Zahnprofil 88 eingreift. Der obere Siebkörper 45 trägt in seinem Zentrum koaxial zur Kegelache39 angeordnet den Rohrabschnitt 55. Der Rohrabschnitt 55 weist am Übergangsbereich zur oberen Siebfläche 53 einen im Durchmesser vergrößerten Abschnitt 68 auf an dem eine zur oberen Entformausnehmung 66 analoge untere Entformausnehmung 67 angeformt ist. Der im Durchmesser vergrößerte Abschnitt 68 bildet einen Tragzapfen 91 für den unteren Siebkörper 46. Die untere Entformausnehmung 67 ist zur Herstellung von den unteren Gegenrastelementen 69 zur Halterung des unteren Siebkörpers 46 am oberen Siebkörper 45 vorgesehen. Um das untere Sieb 46 über einen begrenzten Drehwinkel am oberen Siebkörper 45 zu lagern sind am oberen Siebkörper 45 zwei den Drehwinkel begrenzende radiale Gegenanschlagelemente 92 am Tragzapfen 91 angeformt.

Die radialen Gegenanschlagelemente 92 des oberen Siebkörpers 45 greifen in je ein in Figur 8 näher gezeigtes Anschlagelement 93 am unteren Siebkörper 46 ein. Die Anschlagelemente 93 sind als radial innere Aussparungen eines Ringbundes 94 des unteren Siebkörpers 46 ausgebildet. Die zwei um einen Winkel versetzten stegförmigen Gegenanschlagelemente 92 bildet mit den beiden axialnutartigen Anschlagelementen 93 nicht nur die Winkelbegrenzung für das Verdrehen unterem Siebkörper 46 bezüglich des oberen Siebkörpers 45, sondern bilden gleichzeitig eine Sitzkontrolle, da der untere Siebkörper nur in einer einzigen Winkelposition gegenüber dem oberen Siebkörper 45 an diesem befestigt werden kann. Zur Wahrung eines gleichmäßigen Abstandes von unterem Siebkörper 46 gegenüber dem oberen Siebkörper 45 sind vier gleichmäßig über den Umfang verteilte Abstandshalter 95 an einer dem oberen Siebkörper 45 zugewandten Seitenfläche der unteren Siebbodenfläche 77 angeformt. Die Abstandshalter 95 sind als noppenartige Erhebungen ausgebildet, die sich von der Oberseite der unteren Siebbodenfläche 77 erheben.

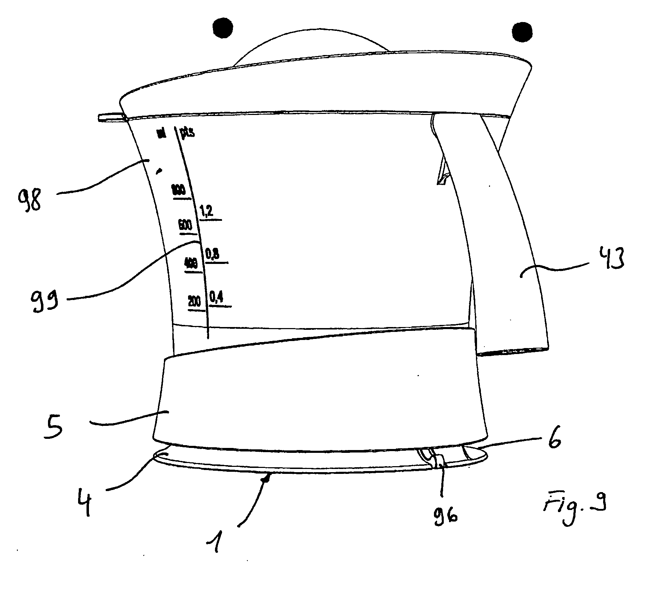

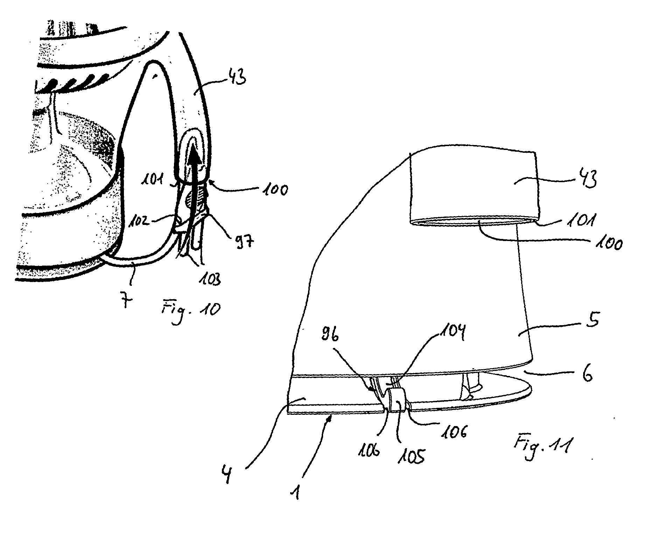

In Figur 9 ist die Saftpresse gemäß Figur 1 in perspektivischer Ansicht von der Seite gezeigt. Der Gehäuseboden 1 ist über den Umfang mit der Schürze 5 umgeben. Oberhalb der Schürze 5 ist der Auffangbehälter 37 aufgesetzt. Der Auffangbehälter 37 weist eine transparente Behälterwand 98 auf, an der eine Hohlmaßskala 99 eingeprägt ist. Am Gehäuseboden 1 ist der umlaufende Tragrand 4 angeformt. Der Tragrand 4 und die Schürze 5 begrenzen die Ringnut 6. In die Ringnut 6 ist das Anschlusskabel 7 aufwickelbar. Um zu Verhindern, dass das Anschlusskabel 7 sich von dem in der Ringnut 6 getragenen Kabelwickel ungewollt löst, ist am Tragrand 4 eine federelastische Rastnase 96 angeformt. Die federelastische Rastnase 96 ist in Figur 11 in einem vergrößerten Ausschnitt gezeigt. Die Funktion des hohlen Griffes 43 als Aufnahme für einen Netzstecker 97 ist in Figur 10 dargestellt.

Figur 10 zeigt wie der Netzstecker 97 in den hohlen Griff 43 in Pfeilrichtung eingesetzt wird. Das elektrische Anschlusskabel 7 wird zu einer Schlaufe gebogen und der Netzstecker 97 rückseitig mit der Schlaufe voraus über eine Öffnung 100 im hohlen Griff 43 eingeführt. Die Querschnittskontur der Öffnung 100 bzw. des hohlen Griffes 43 ist wie in Figur 11 angedeutet der Kontur des Netzstecker 97 angepasst. Der Netzstecker 97 kann in den hohler Griff 43 eingeschoben werden, bis ein als Randabsatz am Netzstecker 97 ausgebildetes Anschlagelement 102 am stirnseitigen Randabschnitt 101 des hohlen Griffes 43 ansteht. In dieser Endposition des Netzsteckers 97 im hohlen Griff 43 stehen zwei elektrische Kontaktstifte 103 weiterhin nach außen vor, so dass der Netzstecker 97 an den zwei elektrischen Kontaktstiften 103 angefasst und aus dem hoheln Griff 43 wieder herausgezogen werden kann.

Die in Figur 11 vergrößert dargestellte federelastische Rastnase 96 ist an den Tragrand 4 direkt angeformt. Die federelastische Rastnase 96 weist einen Stegabschnitt 104 auf, der an seinem einen Ende mit dem Tragrand 4 verbunden ist. An seinem anderen, dem freien Ende weist der Stegabschnitt 104 eine widerhakenartige Verdickung 105 auf, die den freien Spalt der Ringnut 6 verengt. Dazu ragt die Verdickung 105 etwa bis zur Mittel über die Ringnut 6 hinweg. In einem mittleren Bereich ist der Stegabschnitt 104 entsprechend der Form des Tragrandes 4, wie in Figur 1 im Querschnitt gezeigt, rinnenartig gebogen geformt. Die rinnenartig gebogene Form ist dem Querschnitt des elektrischen Anschlusskabels 7 angepasst. Der Stegabschnitt 104 bzw. die Verdickung 105 wird seitlich von zwei Aussparungen 106 begrenzt, die ein freies elastisches Ausweichen der federelastischen Rastnase 96 im Tragrand 4 ermöglichen.

## Patentansprüche

1. Saftpresse insbesondere zum Entsaften von Zitrusfrüchten, mit einer oberhalb eines Auffangbehälters (37) für ausgepressten Saft angeordneten Siebfläche (53) und einem um seine Kegelachse (39) drehbaren, mindestens ein Passierelement (74) aufweisenden Presskegel (36), der eine äußere Kegelwand (58) aufweiset, deren Grundriss einen saftdurchlässigen Bereich (64) der Siebfläche (53) verdeckt, wobei das Passierelement (74) zum Überstreichen des verdeckten saftdurchlässigen Bereiches (64) drehfest mit dem Presskegel (36) verbunden ist, **dadurch gekennzeichnet, dass** das Passierelement (74) eine dem verdeckten saftdurchlässigen Bereich (64) der Siebfläche (53) zugewandte Scharfkantige Stirnkante (75) aufweist.

2. Saftpresse nach Anspruch 1, **dadurch gekennzeichnet, dass** das mindestens eine Passierelement (74) am Presskegel (36) angeformt ist.

3. Saftpresse nach Anspruch 2, **dadurch gekennzeichnet**, das das mindestens eine Passierelement (74) an einer Innenseite der Kegelwand (58) angeformt ist.

4. Saftpresse nach einem der Ansprüche 1 bis 3, **dadurch gekennzeichnet, dass** zwei gegenüberliegend am Presskegel (36) angeordnete Passierelemente (74) vorgesehen sind.

5. Saftpresse nach einem der Ansprüche 1 bis 4, **dadurch gekennzeichnet, dass** eine Vielzahl gleichmäßig über den Umfang verteilter Passierelemente (74) am Presskegel (36) vorgesehen sind.

6. Saftpresse nach einem der Ansprüche 1 bis 5, **dadurch gekennzeichnet, dass** die Scharfkantige Stirnkante (75) des Passierelements (74) radial erstreckend angeordnet ist.

7. Saftpresse nach einem der Ansprüche 1 bis 6, **dadurch gekennzeichnet, dass** die Scharfkantige Stirnkante (75) in einem von der Kegelwand (58) umgebenden Hohlraum des Presskegels (36) angeordnet ist.

8. Saftpresse nach Anspruch 7, **dadurch gekennzeichnet, dass** die Scharfkantige Stirnkante (75) an einem in den Hohlraum des Presskegels (36) hineinragenden Stegabschnitt des Presskegels (36) ausgebildet ist.

9. Saftpresse nach Anspruch 8, **dadurch gekennzeichnet, dass** der Stegabschnitt senkrecht zu dem vom Presskegel (36) verdeckten saftdurchlässigen Bereich (64) der Siebfläche (53) ausgerichtet ist.

## Claims

1. Juice press, particularly for extracting juice from citrus fruits, with a sieve surface (53), which is arranged above a collecting container (37) for expressed juice, and a press cone (36), which is rotatable about a cone axis (39) and comprises at least one passage element (74) and which has an outer cone wall (58), the plan of which covers a juice-permeable region (64) of the sieve surface (53), wherein the passage element (74) is, for sweeping over the covered juice-permeable region (64), connected with the press cone (36) to be secure against rotation relative thereto, **characterised in that** the passage element (74) has a sharp-edged end edge (75) facing the covered juice-permeable region (64) of the sieve surface (53).

2. Juice press according to claim 1, **characterised in that** the at least one passage element (74) is formed at the press cone (36).

3. Juice press according to claim 2, **characterised in that** the at least one passage element (74) is formed at an inner side of the cone wall (58).

4. Juice press according to any one of claims 1 to 3, **characterised in that** two passage elements (74), which are arranged oppositely at the press cone (36), are provided.

5. Juice press according to any one of claims 1 to 4, **characterised in that** a plurality of passage elements (74), which are uniformly distributed around the circumference, is provided at the press cone (36).

6. Juice press according to any one of claims 1 to 5, **characterised in that** the sharp-edged end edge (75) of the passage element (74) is arranged to extend radially.

7. Juice press according to any one of claims 1 to 6, **characterised in that** the sharp-edged end edge (75) is arranged in a cavity, which is surrounded by the cone wall (58), of the press cone (36).

8. Juice press according to claim 7, **characterised in that** the sharp-edged end edge (75) is formed at a web section, which protrudes into the cavity of the press cone (36), of the press cone (36).

9. Juice press according to claim 8, **characterised in that** the web section is oriented perpendicularly to the juice-permeable region (64), which is covered by the press cone (36), of the sieve surface (53).

## Revendications

1. Presse-fruits, en particulier pour extraire le jus des agrumes, avec une surface de filtration (53) disposée au-dessus d'un réservoir collecteur (37) pour jus pressé et un cône de compression (36) tournant autour de son axe de cône (39), présentant au moins un élément de filtrage (74), qui présente une paroi de cône externe (58) dont le plan cache une zone (64) perméable au jus de la surface de filtration (53), dans lequel l'élément de filtrage (74) est relié en rotation au cône de compression (36) pour le passage sur la zone cachée perméable au jus (64), **caractérisé en ce que** l'élément de filtrage (74) présente un bord d'attaque (75) à bords vifs tourné vers la zone (64) cachée perméable au jus de la surface de filtration (53).

2. Presse-fruits selon la revendication 1, **caractérisé en ce que** l'au moins un élément de filtrage (74) est formé sur le cône de compression (36).

3. Presse-fruits selon la revendication 2, **caractérisé en ce que** l'au moins un élément de filtrage (74) est formé sur une face interne de la paroi de cône (58).

4. Presse-fruits selon l'une des revendications 1 à 3, **caractérisé en ce que** deux éléments de filtrage (74) disposés de manière opposée sur le cône de compression (36) sont prévus.

5. Presse-fruits selon l'une des revendications 1 à 4, **caractérisé en ce qu'**une pluralité d'éléments de filtrage (74) répartis régulièrement sur le périmètre sont prévus sur le cône de compression (36).

6. Presse-fruits selon l'une des revendications 1 à 5, **caractérisé en ce que** le bord d'attaque (75) à bords vifs de l'élément de filtrage (74) est disposé en s'étendant radialement.

7. Presse-fruits selon l'une des revendications 1 à 6, **caractérisé en ce que** le bord d'attaque (75) à bords vifs est disposé dans une cavité du cône de compression (36) entourée par la paroi de cône (58).

8. Presse-fruits selon la revendication 7, **caractérisé en ce que** le bord d'attaque (75) à bords vifs est exécuté sur une section de traverse du cône de compression (36) qui s'avance dans la cavité du cône de compression (36).

9. Presse-fruits selon la revendication 8, **caractérisé en ce que** la section de traverse est alignée verticalement par rapport à la zone (64) de la surface de filtration (53) perméable au jus couverte par le cône de compression (36).
